(19) 

Europäisches
Patentamt

European
Patent Office

Office européen
des brevets

(11) **EP 4 301 061 A1**

(12) **EUROPEAN PATENT APPLICATION**
published in accordance with Art. 153(4) EPC

(43) Date of publication:
**03.01.2024 Bulletin 2024/01**

(21) Application number: **21927133.5**

(22) Date of filing: **23.02.2021**

(51) International Patent Classification (IPC):
***H04W 72/04*** *(2023.01)*

(52) Cooperative Patent Classification (CPC):
**H04W 72/04;** Y02D 30/70

(86) International application number:
**PCT/CN2021/077524**

(87) International publication number:
**WO 2022/178688 (01.09.2022 Gazette 2022/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100085 (CN)**

(72) Inventor: **ZHU, Yajun
Beijing 100085 (CN)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **UPLINK SIGNAL TRANSMISSION METHOD AND APPARATUS, DEVICE AND STORAGE
MEDIUM**

(57) The present invention provides an uplink signal transmission method and apparatus, and a device and a storage medium, and relates to the technical field of mobile communications. The method comprises: dividing the transmission time of an uplink signal into a plurality of time periods according to a third duration; obtaining an open-loop uplink timing advance and a closed-loop uplink timing advance of each time period, and generating a timing advance of each time period according to the open-loop uplink timing advance and the closed-loop uplink timing advance of each time period; and adjusting, according to the timing advance of each time period, the transmission time of the uplink signal corresponding to the time period. Therefore, the transmission time of the uplink signal is adjusted by tracking and compensating for the change of a propagation delay during transmission, thereby avoiding interference between an uplink multiuser and a multi-carrier.

dividing a transmission time of the uplink signal into a plurality of
time segments according to a third duration, where a duration of
each of the plurality of time segments is not greater than the third
duration — 101

obtaining an open-loop uplink timing advance and a closed-loop
uplink timing advance for each time segment, and generating a
timing advance for each time segment according to the open-loop
uplink timing advance and the closed-loop uplink timing advance
for each time segment — 102

adjusting a transmission time of one of the plurality of time
segments of the uplink signal according to a corresponding timing
advance for the one of the plurality of time segments — 103

**FIG. 1**

EP 4 301 061 A1

**Description**

**FIELD**

The present invention relates to the field of mobile communication technology, and particularly to a method, an apparatus and a device for transmitting an uplink signal, and a storage medium.

**BACKGROUND**

At present, in the research of wireless communication technology, satellite communication is considered as an important aspect for the development of the future wireless communication technology. Satellite communication refers to the communication carried out by a radio communication device on the ground using satellites as relay nodes. The satellite communication system is comprised of a satellite portion and a terrestrial portion. The satellite communication is characterized in that the communication range is large, and the communication can be performed between any two points within the communication range covered by electric waves emitted by a satellite; and it is not easily affected by land disasters, resulting in a high reliability. The satellite communication may be used as an important supplement to the terrestrial cellular communication system due to its advantage of extending the coverage area. In the future wireless communication system, the satellite communication system and the terrestrial cellular communication system will gradually achieve the deep integration and truly realize the intelligent connection of all things.

In the related art, in order to meet industry requirements of the Internet of Things, in the case where applications of the above-mentioned industries are realized according to Narrow Band Internet of Things (NB-IoT) or Enhanced Machine Type Communication (eMTC), the NB-IoT/eMTC needs to provide a wider coverage by using the satellite communication.

However, the non-terrestrial network has a large propagation delay, ranging from a few ms to hundreds of ms. The rapid movement of satellites, particularly LEO satellites, results in a rapid change in the propagation delay. The existing NB-IoT/eMTC uplink synchronization mechanism cannot track and compensate for the rapid change in the propagation delay during transmission, which may cause uplink interference among multiple users and multiple carriers.

**SUMMARY**

According to a first aspect of embodiments of the present invention, there is provided a method for transmitting an uplink signal. The method is applied to a terminal device, and includes: dividing a transmission time of the uplink signal into a plurality of time segments according to a third duration; obtaining an open-loop uplink timing advance and a closed-loop uplink timing advance for each time segment, and generating a timing advance for each time segment according to the open-loop uplink timing advance and the closed-loop uplink timing advance for each time segment; and adjusting a transmission time of one of the plurality of time segments of the uplink signal according to a corresponding timing advance for the one of the plurality of time segments.

Optionally, dividing the transmission time of the uplink signal into the plurality of time segments includes: receiving a first effective duration of the open-loop uplink timing advance and/or a second effective duration of the closed-loop uplink timing advance transmitted by a network side; and dividing the transmission time of the uplink signal into the plurality of time segments according to the first effective duration and/or the second effective duration, where the duration of each of the plurality of time segments is not greater than the third duration.

Optionally, determining the third duration according to the first effective duration and/or the second effective duration includes: taking a minimum duration of the first effective duration and the second effective duration as the third duration.

Optionally, obtaining the open-loop uplink timing advance for each time segment includes: calculating the open-loop uplink timing advance for each time segment according to one or more of positioning information of the terminal device, position information of a satellite, and velocity information of the satellite.

Optionally, the position information of the satellite and the velocity information of the satellite are received from a network side or obtained according to an ephemeris received from the network side.

Optionally, obtaining the closed-loop uplink timing advance for each time segment includes: receiving at least one closed-loop uplink timing advance transmitted by a network side; determining, according to a receiving time and a second effective duration of each closed-loop uplink timing advance, the closed-loop uplink timing advance that matches each time segment; and determining the closed-loop uplink timing advance corresponding to one time segment to be set as a fixed value in a case that no closed-loop uplink timing advance matches the one time segment.

Optionally, the fixed value is set as zero.

Optionally, obtaining the closed-loop uplink timing advance for each time segment includes: receiving an adjustment increment for the closed-loop uplink timing advance transmitted by a network side and an adjustment step size of the adjustment increment; calculating an elapsed duration according to an obtaining time of a last closed-loop uplink timing advance and a start time of a current time segment for pending transmission; and calculating a closed-loop uplink timing advance for the current time segment for pending transmission according to one or more of the last closed-loop uplink timing advance, the elapsed duration, the adjustment increment, and the adjustment step size.

Optionally, generating the timing advance for each time segment according to the open-loop uplink timing advance and the closed-loop uplink timing advance for each time segment includes: obtaining the timing advance for each time segment by performing summation on the open-loop uplink timing advance and the closed-loop uplink timing advance for each time segment.

Optionally, the method for transmitting an uplink signal, applied to a terminal device further includes: receiving an uplink timing advance at a cell level or a beam level transmitted by a network side; where generating the timing advance for each time segment according to the open-loop uplink timing advance and the closed-loop uplink timing advance for each time segment includes: obtaining the timing advance for each time segment by performing summation on the uplink timing advance at the cell level or the beam level as well as the open-loop uplink timing advance and the closed-loop uplink timing advance for each time segment.

According to a second aspect of embodiments of the present invention, there is provided a method for transmitting an uplink signal, applied to a network side, including: calculating at least one closed-loop uplink timing advance according to an arrival time of the uplink signal of a terminal device and transmitting the at least one closed-loop uplink timing advance to the terminal device, to enable the terminal device to obtain the closed-loop uplink timing advance that matches each time segment for transmitting the uplink signal; and transmitting satellite information to the terminal device to enable the terminal device to calculate an open-loop uplink timing advance for each time segment according to the satellite information, and generate a timing advance for each time segment according to the open-loop uplink timing advance and the closed-loop uplink timing advance to adjust a transmission time of one of the plurality of time segments of the uplink signal according to a corresponding timing advance for the one of the plurality of time segments.

Optionally, the method further includes: transmitting a first effective duration of the open-loop uplink timing advance and/or a second effective duration of the closed-loop uplink timing advance to the terminal device, to enable the terminal device to divide the transmission time of the uplink signal into a plurality of time segments according to the first effective duration and/or the second effective duration, where the duration of each of the plurality of time segments is not greater than the third duration.

Optionally, transmitting the satellite information to the terminal device includes: transmitting an ephemeris and/or position information of a satellite and/or velocity information of the satellite to the terminal device.

Optionally, the method further includes: transmitting an adjustment increment for the closed-loop uplink timing advance and an adjustment step size of the adjustment increment to the terminal device, to enable the terminal device to calculate a closed-loop uplink timing advance for a current time segment for pending transmission according to the adjustment increment and the adjustment step size.

According to a third aspect of embodiments of the present invention, there is provided an apparatus for transmitting an uplink signal, applied to a terminal device, and including: a dividing module, configured to divide a transmission time of the uplink signal into a plurality of time segments according to a third duration; a generating module, configured to obtain an open-loop uplink timing advance and a closed-loop uplink timing advance for each time segment, and to generate a timing advance for each time segment according to the open-loop uplink timing advance and the closed-loop uplink timing advance for each time segment; and an adjusting module, configured to adjust a transmission time of one of the plurality of time segments of the uplink signal according to a corresponding timing advance for the one of the plurality of time segments.

According to a fourth aspect of embodiments of the present invention, there is provided an apparatus for transmitting an uplink signal, applied to a network side, and including: a first transmitting module, configured to calculate at least one closed-loop uplink timing advance according to an arrival time of the uplink signal at a terminal device and transmit the at least one closed-loop uplink timing advance to the terminal device, to enable the terminal device to obtain the closed-loop uplink timing advance that matches each time segment for transmitting the uplink signal; and a second transmitting module, configured to transmit satellite information to the terminal device to enable the terminal device to calculate an open-loop uplink timing advance for each time segment according to the satellite information, and generate a timing advance for each time segment according to the open-loop uplink timing advance and the closed-loop uplink timing advance to adjust a transmission time of one of the plurality of time segments of the uplink signal according to a corresponding timing advance for the one of the plurality of time segments.

According to a fifth aspect of embodiments of the present invention, there is provided a communication device, including: a processor; a transceiver; a memory; and a computer program stored in the memory. The processor is configured to run the computer program to implement the method for transmitting the uplink signal according to the embodiments of the first aspect.

According to a sixth aspect of embodiments of the present invention, there is provided a communication device, including: a processor; a transceiver; a memory; and a computer program stored in the memory. The processor is configured to run the computer program to implement the method for transmitting the uplink signal according to the embodiments of the second aspect.

According to a seventh aspect of embodiments of the present invention, there is provided a processor-readable storage medium having a computer program stored thereon, where the computer program is configured to enable the processor to implement the method for transmitting the uplink signal according to the embodiments of the first aspect or the embodiments of the second aspect.

The methods, apparatus and device for transmitting an uplink signal and the storage medium provided by the present invention have at least the following technical effects.

Described at a side of the terminal device, the transmission time of the uplink signal is divided into the plurality of time segments according to the third duration, the open-loop uplink timing advance and the closed-loop uplink timing advance for each time segment are obtained, the timing advance for each time segment is generated according to the open-loop uplink timing advance and the closed-loop uplink timing advance for each time segment, and the transmission time of one of time segments of the uplink signal is adjusted according to the corresponding timing advance for the one time segment. In the way, thee present method is capable of tracking and compensating for the rapid change in the propagation delay during transmission, thus avoiding the uplink interference among multiple users and multiple carriers.

Additional aspects and advantages of embodiments of the present invention will be given in part in the following descriptions, become apparent in part from the following descriptions, or be learned from the practice of the embodiments of the present invention.

## BRIEF DESCRIPTION OF THE DRAWINGS

These and other aspects and advantages of embodiments of the present invention will become apparent and more readily appreciated from the following descriptions made with reference to the accompanying drawings, in which:

FIG. 1 is a flowchart of a method for transmitting an uplink signal according to an embodiment of the present invention;
FIG. 2 is a flowchart of a method for transmitting an uplink signal according to another embodiment of the present invention;
FIG. 3 is a flowchart of a method for transmitting an uplink signal according to yet another embodiment of the present invention;
FIG. 4 is a flowchart of a method for transmitting an uplink signal according to a further embodiment of the present invention;
FIG. 5 is a flowchart of a method for transmitting an uplink signal according to a specific embodiment of the present invention;
FIG. 6 is a flowchart of a method for transmitting an uplink signal according to a further embodiment of the present invention;
FIG. 7 is a schematic diagram illustrating an apparatus for transmitting an uplink signal according to the present invention;
FIG. 8 is a schematic diagram illustrating another apparatus for transmitting an uplink signal according to the present invention; and
FIG. 9 is a block diagram illustrating a communication device according to an embodiment of the present invention.

## DETAILED DESCRIPTION

Embodiments will be described in detail herein, examples of which are illustrated in the accompanying drawings. The same or similar elements and the elements having same or similar functions are denoted by same or similar reference numerals throughout the description. The embodiments described herein with reference to drawings are examples, and used to generally understand the present invention. The embodiments shall not be construed to limit the present invention.

In the related art, in order to enhance coverage capability, NB-IoT/eMTC introduces a mechanism of repeated transmissions. When the NB-IoT/eMTC uses an uplink repeated transmission mechanism, a timing advance is adjusted only at an initial time of the repeated transmission. However, the rapid movement of satellites (especially LEO satellites) leads to the rapid change in the propagation delay. The existing NB-IoT/eMTC uplink synchronization mechanism may not track and compensate for the rapid change in the propagation delay during transmission, which may cause the uplink interference among multiple users and multiple carriers.

In order to solve the above technical problems, the present invention provides a method which is capable of tracking and compensating for the rapid change in the propagation delay during transmission and adjusting a transmission time of the uplink signal.

For the sake of completeness of description, description will be made to following embodiments by focusing on a terminal device and a network side, respectively, and the following description will first focus on the terminal device.

The terminal device according to embodiments of the present invention may be a mobile phone, a portable wearable device, a notebook computer, and the like. A device of the network side may be a base station, and the like.

Description made to focus on the terminal device is as follows.

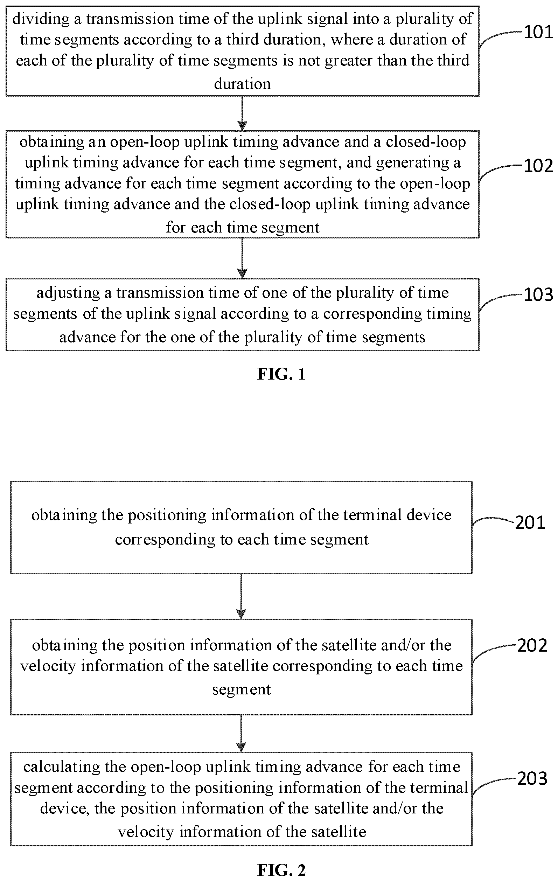

FIG. 1 is a flowchart of a method for transmitting an uplink signal according to an embodiment of the present invention. The method for transmitting the uplink signal includes the following steps.

At block 101, a transmission time of the uplink signal is divided into a plurality of time segments according to a third duration, where each time segment is not greater than the third duration.

In actual implementation, the third duration is related to a first effective duration of an open-loop uplink timing advance and/or a second effective duration of a closed-loop uplink timing advance. In the embodiment, the first effective duration of the open-loop uplink timing advance and/or the second effective duration of the closed-loop uplink timing advance, which are transmitted by the network side, are received.

The open-loop uplink timing advance may be understood as a round-trip delay of an electromagnetic wave corresponding to a distance between the terminal device and the network side, and the open-loop uplink timing advance is transmitted by the network side.

The first effective duration may be understood as an effective control duration for the open-loop uplink timing advance to control the uplink signal. For example, in a case that the first effective duration is 2 milliseconds, it represents that the open-loop uplink timing advance controls the uplink signal for an effective duration of 2 milliseconds.

The closed-loop uplink timing advance may be calculated from an arrival time of the uplink signal to the network side, and the closed-loop uplink timing advance is transmitted by the network side.

The second effective duration may be understood as the effective control duration for the closed-loop uplink timing advance to control the uplink signal. For example, in a case that the second effective duration is 2 milliseconds, it represents that the closed-loop uplink timing advance controls the uplink signal for an effective duration of 2 milliseconds.

In some embodiments, the first effective duration of the open-loop uplink timing advance transmitted by the network side may be received to further control the transmission time of the uplink signal according to the first effective duration of the open-loop uplink timing advance. In the embodiments, the transmission time of the uplink signal is controlled according to the distance between the terminal device and the network side.

In some embodiments, the second effective duration of the closed-loop uplink timing advance transmitted by the network side may be received to further control the transmission time of the uplink signal according to the second effective duration of the closed-loop uplink timing advance. In the embodiments, the transmission time of the uplink signal is controlled according to the arrival time of the uplink signal transmitted by the terminal device to the network side.

In some embodiments, the first effective duration of the open-loop uplink timing advance transmitted by the network side and the second effective duration of the closed-loop uplink timing advance transmitted by the network side may be received, and the transmission time of the uplink signal may be controlled according to both the first effective duration of the open-loop uplink timing advance and the second effective duration of the closed-loop uplink timing advance. That is, in the embodiments, the transmission time of the uplink signal is controlled according to both the distance between the terminal device and the network side and the arrival time of the uplink signal transmitted by the terminal device to the network side.

In this way, in some embodiments, the third duration may be directly determined according to the first effective duration. For example, in a case that only the first effective duration of the open-loop uplink timing advance transmitted by the network side is received, the first effective duration is directly taken as the third duration.

In some embodiments, the third duration may be directly determined according to the second effective duration. For example, in a case that only the second effective duration of the closed-loop uplink timing advance transmitted by the network side is received, the second effective duration is directly taken as the third duration.

In further embodiments, the third duration is determined according to the first effective duration and the second effective duration. For example, when the first effective duration of the open-loop uplink timing advance transmitted by the network side and the second effective duration of the closed-loop uplink timing advance transmitted by the network side are received, the third duration is determined according to the first effective duration and the second effective duration.

It should be noted that, in different application scenarios, there are different ways for determining the third duration according to the first effective duration and the second effective duration in the embodiments, and examples are as follows.

Example 1

In this example, the third duration is determined by taking the minimum duration of the first effective duration and the second effective duration. For example, in a case that the first effective duration is 2 milliseconds and the second effective duration is 3 milliseconds, the third duration is 2 milliseconds.

Example 2

In this example, the third duration is determined by determining the minimum duration of the first effective duration and the second effective duration, and taking a preset percentage of the minimum duration as the third duration, where the preset percentage is less than 1, such as 80%.

Furthermore, in an actual implementation process, a period for transmitting the uplink signal (i.e., the transmission time of the uplink signal) may be long, and the propagation delay may change during this period. Therefore, in order to further track the delay, in an embodiment of the present invention, a control granularity of the transmission time is refined, and the transmission time of the uplink signal is divided into the a plurality of time segments according to the third duration. The duration for each time segment is not greater than the third duration in order to ensure that the transmitting time of the uplink signal may be effectively controlled by a relevant uplink advance. For example, in a case that the transmission time of the uplink signal is 10 milliseconds, the transmission time may be divided into five time segments: [0, 2), [2, 4), [4, 6), [6, 8) and [8, 10]. In some examples, different time segments may have different lengths of time.

It should be noted that, in different application scenarios, there are different ways for dividing the transmission time of the uplink signal into the plurality of time segments according to the third duration, and examples are as follows.

Example 1

In this example, the transmission time is divided into time segments directly according to the third duration. For example, starting from an initial time point of the transmission time, the transmission time is divided into time segments with each interval having a duration of the third duration. In a case that there is any remaining time section at the end of the transmission time that is less than the third duration, the remaining time section will be taken as a time segment.

Example 2

In this example, a total time length of the transmission time of the uplink signal is obtained, and the total time length is divided into one or more time segments according to a random algorithm. The lengths for all the time segments may not be exactly the same, and the length for each time segment is not greater than the third duration. For example, in a case that the total time length is 10 and the third duration is 3, the total time length may be divided into five time segments: 2, 1, 3, 3, 1, or divided into four time segments: 3, 3, 3, 1. An order of the different time segments in the total time length may be arbitrarily arranged, and is not limited herein.

At block 102, an open-loop uplink timing advance and a closed-loop uplink timing advance for each time segment are obtained, and a timing advance for each time segment is generated according to the open-loop uplink timing advance and the closed-loop uplink timing advance for each time segment.

In the embodiments, the open-loop uplink timing advance and the closed-loop uplink timing advance for each time segment are obtained, and the timing advance for each time segment is generated according to the open-loop uplink timing advance and the closed-loop uplink timing advance for each time segment, thus realizing the determination of the time segment-based timing advance. The timing advance determined takes into account the round-trip delay of the electromagnetic wave travelling between the network side and the terminal device, as well as the arrival time of the uplink signal, and sufficiently tracks and compensates for the rapid change in the propagation delay during transmission.

At block 103, a transmission time of one of the plurality of time segments of the uplink signal is adjusted according to a corresponding timing advance for the one of the plurality of time segments.

In the embodiments, the transmission time of the uplink signal in one time segment is adjusted according to the timing advance for the one time segment. For example, the transmission time of the uplink signal in one time segment is advanced by a corresponding timing advance, which tracks and compensates for the rapid change in the propagation delay during transmission, and solves the uplink interference among multiple users and multiple carriers.

Therefore, with the method for transmitting the uplink signal according to thee embodiments of the present invention, the transmission time of the uplink signal is divided into the plurality of time segments according to the third duration, the open-loop uplink timing advance and the closed-loop uplink timing advance are obtained for each time segment, the timing advance for each time segment is generated according to the open-loop uplink timing advance and the closed-loop uplink timing advance for each time segment, and the transmission time of one time segment of the uplink signal is adjusted according to the timing advance corresponding to the one time segment. In this way, the present method is capable of tracking and compensating for the rapid change in the propagation delay during transmission, thus solving the uplink interference among multiple users and multiple carriers.

In order to solve the technical problem of the uplink interference among multiple users and multiple carriers, in the method for transmitting the uplink signal according to the present invention, the terminal device receives the first effective duration of the open-loop uplink timing advance and/or the second effective duration of the closed-loop uplink timing advance transmitted by the network side, the transmission time of the uplink signal is divided into the plurality of time segments according to the first effective duration and/or the second effective duration, the open-loop uplink timing advance and the closed-loop uplink timing advance for each time segment are obtained, the timing advance for each time segment is generated according to the open-loop uplink timing advance and the closed-loop uplink timing advance for each time segment, and the transmission time of one time segment of the uplink signal is adjusted according to the timing advance corresponding to the one time segment.

It should be noted that, in different application scenarios, there are different ways for generating the timing advance for each time segment according to the open-loop uplink timing advance and the closed-loop uplink timing advance for each time segment, and examples are as follows.

Example 1

In this example, the timing advance for each time segment is obtained by performing summation on the open-loop uplink timing advance and the closed-loop uplink timing advance for each time segment. For example, the open-loop uplink timing advance and the closed-loop uplink timing advance for Time Segment 1 are 2 milliseconds and 3 milliseconds, respectively, and thus 5 milliseconds obtained from the summation of 2 milliseconds and 3 milliseconds is taken as the timing advance for Time Segment 1. In this way, the timing advance takes into account the round-trip delay of the electromagnetic wave travelling between the network side and the terminal device and the arrival time of the uplink signal to the network side, thereby effectively tracking and compensating for the rapid change in the propagation delay during transmission.

Example 2

In this example, for each time segment, the open-loop uplink timing advance and the closed-loop uplink timing advance are compared to determine the maximum value thereof, and a value being 2 times of the maximum value is taken as the timing advance, thereby further ensuring that the uplink signal for each time segment may arrive without delay.

Therefore, with the method for transmitting the uplink signal according to the embodiments of the present invention, different ways are used to generate the timing advance for each time segment according to the open-loop uplink timing advance and the closed-loop uplink timing advance for each time segment in different application scenarios, which improves the flexibility of determining the timing advance.

After the transmission time of the uplink signal is divided into the plurality of time segments, in a case that the transmission time of the uplink signal is controlled for each time segment, the timing advance of each time segment is generated according to the open-loop uplink timing advance and the closed-loop uplink timing advance for each time segment, where the open-loop uplink timing advance and the closed-loop uplink timing advance may be determined in different ways according to scene requirements.

The following example illustrates how to determine the open-loop uplink timing advance for each time segment.

In the embodiments, the open-loop uplink timing advance for each time segment is calculated according to one or more of positioning information of the terminal device, position information of a satellite, and velocity information of the satellite.

In some embodiments, as illustrated in FIG. 2, obtaining the open-loop uplink timing advance for each time segment includes the following steps.

At block 201, the positioning information of the terminal device corresponding to each time segment is obtained.

In the embodiment, the positioning information of the terminal device may be obtained according to a GPS positioning of the terminal device.

At block 202, the position information of the satellite and/or the velocity information of the satellite corresponding to each time segment are obtained.

In an embodiment of the present invention, the position information of the satellite corresponding to each time segment is obtained, and the position information of the satellite may include a coordinate position of the satellite.

In the embodiments, the coordinate position of the satellite may be reported and obtained by the network side, or an ephemeris transmitted by the network side may be received, and the position information of the satellite corresponding to each time segment may be obtained according to the ephemeris.

In an embodiment of the present invention, the velocity information of the satellite corresponding to each time segment is obtained, and the velocity of the satellite may be reported and obtained by the network side. In the embodiment, the ephemeris transmitted by the network side may be received, and the velocity information of the satellite corresponding to each time segment may be obtained according to the ephemeris.

In an embodiment of the present invention, the position information of the satellite and the velocity information of the satellite corresponding to each time segment are obtained. In the embodiment, the ephemeris transmitted by the network side may be received, and the position information of the satellite and the velocity information of the satellite corresponding to each time segment may be obtained according to the ephemeris, or the position information of the satellite and the velocity information of the satellite transmitted by the network side may be received.

At block 203, the open-loop uplink timing advance for each time segment is calculated according to the positioning information of the terminal device, the position information of the satellite and/or the velocity information of the satellite.

In an embodiment of the present invention, the open-loop uplink timing advance for each time segment is calculated according to the positioning information of the terminal device and the position information of the satellite. For example, the distance between the terminal device and the satellite is calculated according to the positioning information of the terminal device and the position information of the satellite, the round-trip delay of the electromagnetic wave is calculated according to the distance and the propagation speed of the electromagnetic wave, and the open-loop uplink timing advance for each time segment is determined according to the round-trip delay.

In an embodiment of the present invention, the open-loop uplink timing advance for each time segment is calculated according to the positioning information of the terminal device and the velocity information of the satellite. For example, the position information of the satellite for each time segment is determined according to the velocity information of the satellite, the distance between the terminal device and the satellite is calculated according to the positioning information of the terminal device and the position information of the satellite, the round-trip delay of the electromagnetic wave is calculated according to the distance and the propagation speed of the electromagnetic wave, and the open-loop uplink timing advance for each time segment is determined according to the round-trip delay.

In an embodiment of the present invention, the open-loop uplink timing advance for each time segment is calculated according to the positioning information of the terminal device, the position information of the satellite, and the velocity information of the satellite. For example, in the embodiment, the position information of the satellite for each time segment is calculated according to the position information of the satellite and the velocity information of the satellite, the distance between the terminal device and the satellite is calculated according to the positioning information of the terminal device and the position information of the satellite, the round-trip delay of the electromagnetic wave is calculated according to the distance and the propagation speed of the electromagnetic wave, and the open-loop uplink timing advance for each time segment is determined according to the round-trip delay.

The following examples describes the calculation of the closed-loop uplink timing advance for each time segment.

Example 1

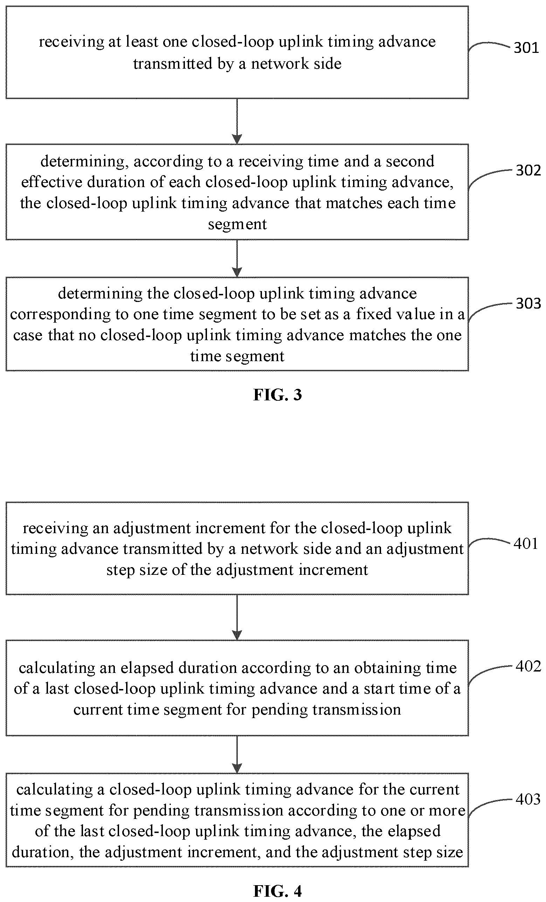

In this example, as illustrated in FIG. 3, obtaining the closed-loop uplink timing advance for each time segment includes the following steps.

At block 301, at least one closed-loop uplink timing advance transmitted by a network side is received.

In the embodiment, at least one closed-loop uplink timing advance transmitted by the network side is received.

At block 302, the closed-loop uplink timing advance that matches each time segment is determined according to a receiving time and the second effective duration of each closed-loop uplink timing advance.

Since the network side will constantly transmit the closed-loop uplink timing advance, in order to determine which closed-loop uplink timing advance may be used for each time segment, the receiving time for each closed-loop uplink timing advance and the corresponding second effective duration received by the terminal device are obtained, to determine the closed-loop uplink timing advance that matches each time segment, thus ensuring that the corresponding time segment is covered within the second effective duration after the second receiving time.

For example, in a case that the receiving time of the closed-loop uplink timing advance is 2 milliseconds and the second effective duration is 3 milliseconds, this may be applicable to a time segment from the second millisecond to the fifth millisecond, or a time segment from the third millisecond to the fifth millisecond.

At block 303, the closed-loop uplink timing advance corresponding to one time segment is determined to be set as a fixed value in a case that no closed-loop uplink timing advance matches the one time segment.

In some embodiments, some time segments do not have a matched closed-loop uplink timing advance, in this case, it is determined that the closed-loop uplink timing advance corresponding to these time segments is set as the fixed value. The fixed value may be scaled according to experimental data. In some embodiments, the fixed value is set as zero.

Example 2

In this example, as illustrated in FIG. 4, obtaining the closed-loop uplink timing advance for each time segment includes the following steps.

At block 401, an adjustment increment for the closed-loop uplink timing advance and an adjustment step size of the adjustment increment transmitted by a network side are received.

At block 402, an elapsed duration is calculated according to an obtaining time of a last closed-loop uplink timing advance and a start time of a current time segment for pending transmission.

In the embodiment, the adjustment increment for the closed-loop uplink timing advance and the adjustment step size of the adjustment increment transmitted by the network side are received, and the elapsed duration is calculated according to the obtaining time of the last closed-loop uplink timing advance and the start time of the current time segment for pending transmission. For example, a time difference between the obtaining time of the last closed-loop uplink timing advance and the start time of the current time segment for pending transmission is taken as the elapsed duration.

At block 403, a closed-loop uplink timing advance for the current time segment for pending transmission is calculated according to one or more of the last closed-loop uplink timing advance, the elapsed duration, the adjustment increment, and the adjustment step size.

In the embodiment, the closed-loop uplink timing advance for the current time segment for pending transmission is calculated according to one or more of the last closed-loop uplink timing advance, the elapsed duration, the adjustment increment, and the adjustment step size. In different application scenarios, the above calculation may be performed in different ways. For example, in a case that the closed-loop uplink timing advance for the current time segment for pending transmission is calculated according to the last closed-loop uplink timing advance, the elapsed duration, the adjustment increment and the adjustment step size, the calculation may have a formula (1),

$$TA_2 = TA_2^{last} + \frac{elapsed\ duration}{K_2} \times \Delta TA_2 \qquad \text{formula (1)}$$

where $\Delta TA_2$ represents the adjustment increment of the closed-loop uplink timing advance, $K_2$ represents the adjustment step size, $TA_2^{last}$ represents the last closed-loop uplink timing advance, and $TA_2$ represents the closed-loop uplink timing advance of the current time segment for pending transmission.

Therefore, with the method for transmitting the uplink signal according to the embodiments of the present invention, the transmission time of the uplink signal is divided into the plurality of time segments, and the timing advance for each time segment is generated according to the open-loop uplink timing advance and the closed-loop uplink timing advance for each time segment, which further ensures precisely tracking and compensating for the rapid change in the propagation delay during transmission, and ensures the real-time transmission of the uplink signal.

According to the above embodiments, in the transmission of the uplink signal, it should be understood that the delay in the transmission of the uplink signal is related to an uplink timing advance at a cell level or a beam level in addition to the round-trip delay of the electromagnetic wave travelling between the terminal device and the network device and the arrival time of the uplink signal.

In this way, in an embodiment of the present invention, the transmission time of the uplink signal is adjusted directly according to the uplink timing advance at the cell level or the beam level.

In the embodiment, the uplink timing advance at the cell level or the beam level transmitted by the network side is received, and the timing advance for each time segment is obtained according to the uplink timing advance at the cell level or the beam level to control the transmission of the uplink signal of each time segment according to the timing advance. In different scenarios, the ways for obtaining the timing advance for each time segment according to the uplink timing advance at the cell level or the beam level may be different. For example, in some embodiments, a corresponding relationship between the uplink timing advance at the cell level or the beam level and the timing advance for each time segment may be constructed in advance, and the timing advance in the corresponding time segment is determined according to the corresponding relationship.

In another embodiment of the present invention, the transmission time of the uplink signal is adjusted in combination with the round-trip delay of the electromagnetic wave between the terminal device and the network side, the arrival time of the uplink signal, and the uplink timing advance at the cell level or the beam level.

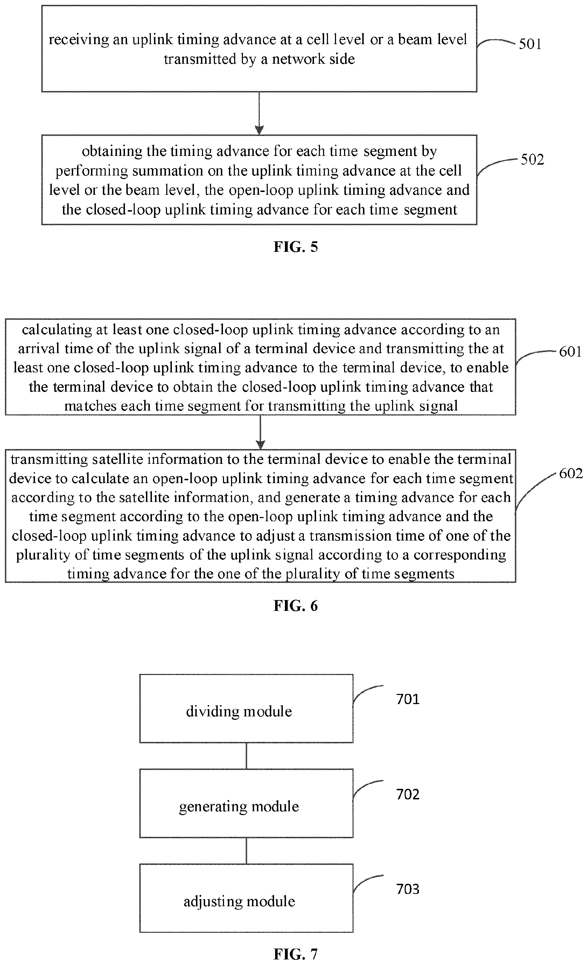

In detail, as illustrated in FIG. 5, the method for transmitting the uplink signal further includes the following steps.

At block 501, the uplink timing advance at the cell level or the beam level transmitted by the network side is received.

At block 502, the timing advance for each time segment is obtained by performing summation on the uplink timing advance at the cell level or the beam level, the open-loop uplink timing advance and the closed-loop uplink timing advance for each time segment.

In the embodiment, the uplink timing advance at the cell level or the beam level transmitted by the network side is received, and the timing advance for each time segment is obtained by performing summation on the uplink timing advance at the cell level or the beam level, the open-loop uplink timing advance and the closed-loop uplink timing advance for each time segment. In this way, the timing advance for each time segment is determined in combination with the round-trip delay of the electromagnetic wave between the terminal device and the network side, the arrival time of the uplink signal, and the uplink timing advance at the cell level or the beam level.

For example, in a case that the open-loop uplink timing advance and the closed-loop uplink timing advance for each time segment are $TA_1 + TA_2$, and the uplink timing advance of the corresponding cell level or beam level is $c\_TA$, the timing advance for each time segment is

$$TA_1 + TA_2 + c\_TA$$

.

Therefore, with the method for transmitting the uplink signal according to the embodiments of the present invention, the timing advance for each time segment is determined in combination with the round-trip delay of the electromagnetic wave between the terminal device and the network side, the arrival time of the uplink signal, and the uplink timing advance at the cell level or the beam level, to further ensure precisely tracking and compensating for the rapid change in the propagation delay during transmission, and avoid the uplink interference among multiple users and multiple carriers.

The method for transmitting the uplink signal according to embodiments of the present invention will be described in a view of the network side.

The description for the method for transmitting the uplink signal focused on the network side is as follows.

FIG. 6 is a flowchart of the method for transmitting the uplink signal according to an embodiment of the present invention. As illustrated in FIG. 6, the method includes the following steps.

At block 601, at least one closed-loop uplink timing advance is calculated according to an arrival time of the uplink signal of the terminal device, and the at least one closed-loop uplink timing advance is transmitted to the terminal device, to enable the terminal device to obtain the closed-loop uplink timing advance that matches each time segment for transmitting the uplink signal.

In the embodiment, the closed-loop uplink timing advance is calculated according to the arrival time of the uplink signal of the terminal device and is transmitted to the terminal device.

In some embodiments, the network side transmits the adjustment increment for the closed-loop uplink timing advance and the adjustment step size of the adjustment increment to the terminal device, the terminal device calculates the elapsed duration according to the obtaining time of the last closed-loop uplink timing advance and the start time of the current time segment for pending transmission, and the terminal device calculates the closed-loop uplink timing advance for the current time segment for pending transmission according to the last closed-loop uplink timing advance, the elapsed duration, the adjustment increment, and the adjustment step size.

In some embodiments, the network side transmits the first effective duration of the open-loop uplink timing advance and/or the second effective duration of the closed-loop uplink timing advance to the terminal device, to enable the terminal device to divide the transmission time of the uplink signal into the plurality of time segments according to the first effective duration and/or the second effective duration.

In addition, it should be noted that each time segment of the uplink signal may be obtained by dividing the transmission time of the uplink signal according to the third duration.

In some embodiments, the network side transmits the first effective duration of the open-loop uplink timing advance and/or the second effective duration of the closed-loop uplink timing advance to the terminal device, to enable the terminal device to determine the third duration according to the first effective duration and/or the second effective duration, and divide the transmission time of the uplink signal into the plurality of time segments according to the third duration, where the duration for each time segment is not greater than the third duration.

The open-loop uplink timing advance may be understood as a round-trip delay of an electromagnetic wave corresponding to a distance between the terminal device and the network side, and the open-loop uplink timing advance is transmitted by the network side.

The first effective duration may be understood as the effective control duration for the open-loop uplink timing advance to control the uplink signal. For example, in a case that the first effective duration is 2 milliseconds, it represents that the open-loop uplink timing advance controls the uplink signal for the effective duration of 2 milliseconds.

The closed-loop uplink timing advance may be calculated from an arrival time of the uplink signal to the network side, and the closed-loop uplink timing advance is transmitted by the network side.

The second effective duration may be understood as the effective control duration for the closed-loop uplink timing advance to control the uplink signal. For example, in a case that the second effective duration is 2 milliseconds, it represents that the closed-loop uplink timing advance controls the uplink signal for the effective duration of 2 milliseconds.

In an embodiment of the present invention, the network side transmits the first effective duration of the open-loop uplink timing advance to the terminal device.

In an embodiment of the present invention, the network side transmits the second effective duration of the closed-loop uplink timing advance to the terminal device.

In an embodiment of the present invention, the network side transmits the first effective duration of the open-loop uplink timing advance and the second effective duration of the closed-loop uplink timing advance to the terminal device.

In the embodiment, the terminal device divides the transmission time of the uplink signal into the plurality of time segments according to the first effective duration and/or the second effective duration.

In some embodiments, the terminal device determines the third duration according to the first effective duration and/or the second effective duration, and divides the transmission time of the uplink signal into the plurality of time segments according to the third duration, where the duration for each time segment is not greater than the third duration.

In some embodiments, the third duration may be determined directly according to the first effective duration. For example, in a case that only the first effective duration of the open-loop uplink timing advance transmitted by the network side is received, the first effective duration may be directly taken as the third duration.

In some embodiments, the third duration may be directly determined according to the second effective duration. For example, the second effective duration may be directly taken as the third duration in a case that only the second effective duration of the closed-loop uplink timing advance transmitted by the network side is received.

In further embodiments, the third duration is determined according to the first effective duration and the second effective duration. For example, in a case that the first effective duration of the open-loop uplink timing advance transmitted by the network side and the second effective duration of the closed-loop uplink timing advance transmitted by the network side are received, the third duration is determined according to the first effective duration and the second effective duration.

It should be noted that in different application scenarios, there are different ways for determining the third duration according to the first effective duration and the second effective duration in the embodiment, and examples are as follows.

Example 1

In this example, the third duration is determined by taking the minimum duration of the first effective duration and the second effective duration. For example, in a case that the first effective duration is 2 milliseconds and the second effective duration is 3 milliseconds, the third duration is 2 milliseconds.

Example 2

In this example, the third duration is determined by determining the minimum duration of the first effective duration and the second effective duration, and taking a preset percentage of the minimum duration as the third duration, where the preset percentage is less than 1, such as 80%.

Furthermore, in the actual implementation process, the transmission time of the uplink signal may be relatively long, and the propagation delay may change during this time. Therefore, in order to further track the delay, in an embodiment of the present invention, a control granularity of the transmission time is refined, and the transmission time of the uplink signal is divided into the plurality of time segments according to the third duration. The duration for each time segment is not greater than the third duration in order to ensure that the transmission time of the uplink signal may be effectively controlled by the relevant uplink advance. For example, in a case that the transmission time of the uplink signal is 10 milliseconds, the transmission time may be divided into five time segments: [0, 2), [2, 4), [4, 6), [6, 8) and [8, 10]. In some examples, different time segments may have different lengths of time.

It should be noted that, in different application scenarios, there are different ways for dividing the transmission time of the uplink signal into the plurality of time segments according to the third duration, and examples are as follows.

Example 1

In this example, the transmission time is divided into time segments directly according to the third duration. For example, starting from an initial time point of the transmission time, the transmission time is divided into time segments with each interval having a duration of the third duration. In a case that there is any remaining time section at the end of the transmission time that is less than the third duration, the remaining time section will be taken as a time segment.

Example 2

In this example, a total time length of the transmission time of the uplink signal is obtained, and the total time length is divided into one or more time segments according to a random algorithm. The lengths for all the time segments may not be exactly the same, and the length for each time segment is not greater than the third duration. For example, in a case that the total time length is 10 and the third duration is 3, the total time length may be divided into five time segments: 2, 1, 3, 3, 1, or divided into four time segments: 3, 3, 3, 1. An order of the different time segments in the total time length may be arbitrarily arranged, and is not limited herein.

At block 602, the satellite information is transmitted to the terminal device to enable the terminal device to calculate an open-loop uplink timing advance for each time segment according to the satellite information, and generate a timing advance for each time segment according to the open-loop uplink timing advance and the closed-loop uplink timing advance to adjust a transmission time of one of the plurality of time segments of the uplink signal according to a corresponding timing advance for the one of the plurality of time segments.

In some embodiments, the satellite information includes one or more of the ephemeris transmitted by the terminal device, the position information of the satellite, and the velocity information of the satellite.

In the embodiment, the satellite information is transmitted to the terminal device to enable the terminal device to calculate an open-loop uplink timing advance for each time segment according to the satellite information, and generate the timing advance for each time segment according to the open-loop uplink timing advance and the closed-loop uplink timing advance to adjust the transmission time of the one of the plurality of time segments of the uplink signal according to the timing advance for the one of the plurality of time segments.

In an embodiment of the present invention, the satellite information includes the position information of the satellite, and the terminal device calculates the open-loop uplink timing advance for each time segment according to the positioning information of the terminal device and the position information of the satellite. For example, the distance between the terminal device and the satellite is calculated according to the positioning information of the terminal device and the position information of the satellite, the round-trip delay of the electromagnetic wave is calculated according to the distance and the propagation speed of the electromagnetic wave, and the open-loop uplink timing advance for each time segment is determined according to the round-trip delay.

In an embodiment of the present invention, the satellite information includes the velocity information of the satellite, and the terminal device calculates the open-loop uplink timing advance for each time segment according to the positioning information of the terminal device and the velocity information of the satellite. For example, the position information of the satellite for each time segment is determined according to the velocity information of the satellite, the distance between the terminal device and the satellite is calculated according to the positioning information of the terminal device and the position information of the satellite, the round-trip delay of the electromagnetic wave is calculated according to the distance and the propagation speed of the electromagnetic wave, and the open-loop uplink timing advance for each time segment is determined according to the round-trip delay.

In an embodiment of the present invention, the satellite information includes the position information of the satellite and the velocity information of the satellite, and the terminal device calculates the open-loop uplink timing advance for each time segment according to the positioning information of the terminal device, the position information of the satellite and the velocity information of the satellite. For example, in the embodiment, position information of the satellite for each time segment is calculated according to the position information of the satellite and the velocity information of the satellite, the distance between the terminal device and the satellite is calculated according to the positioning information of the terminal device and the position information of the satellite, the round-trip delay of the electromagnetic wave is calculated according to the distance and the propagation speed of the electromagnetic wave, and the open-loop uplink timing advance for each time segment is determined according to the round-trip delay.

In the embodiment, the terminal device obtains the open-loop uplink timing advance and the closed-loop uplink timing advance for each time segment, and generates the timing advance for each time segment according to the open-loop uplink timing advance and the closed-loop uplink timing advance for each time segment, to realize the determination of the time segment-based timing advance. The timing advance determined takes into account the round-trip delay of the electromagnetic wave between the network side and the terminal device, and the arrival time of the uplink signal, thus sufficiently tracking and compensating for the rapid change in the propagation delay during transmission.

Furthermore, the terminal device adjusts the transmission time of the uplink signal for one time segment according to the timing advance for the one time segment. For example, the transmission time of the uplink signal for the one time segment is advanced by the corresponding timing advance, which tracks and compensates for the rapid change in the propagation delay during transmission, and solves the uplink interference among multiple users and multiple carriers.

Therefore, with the method for transmitting the uplink signal according to the embodiments of the present invention, the network side calculates at least one closed-loop uplink timing advance according to the arrival time of the uplink signal of the terminal device and transmits the at least one closed-loop uplink timing advance to the terminal device, to enable the terminal device to obtain the closed-loop uplink timing advance that matches each time segment for transmitting the uplink signal, transmits the satellite information to the terminal device to enable the terminal device to calculate an open-loop uplink timing advance for each time segment according to the satellite information, and generates the timing advance for each time segment according to the open-loop uplink timing advance and the closed-loop uplink timing advance to adjust the transmission time of one of the plurality of time segments of the uplink signal according to the corresponding timing advance for the one of the plurality of time segments. In this way, the terminal device is controlled to track and compensate for the rapid change in the propagation delay during transmission, thus avoid the uplink interference among multiple users and multiple carriers.

Corresponding to the method for transmitting the uplink signal provided by the above several embodiments, the present invention further provides an apparatus for transmitting an uplink signal. Since the apparatus for transmitting the uplink signal provided in embodiments of the present invention corresponds to the method for transmitting the uplink signal provided in the above-mentioned embodiments, embodiments of the method for transmitting the uplink signal are applicable to the apparatus for transmitting the uplink signal provided in the embodiments, and will not be described in detail here.

FIG. 7 is a schematic diagram illustrating an apparatus for transmitting an uplink signal according to the present invention.

The apparatus is applied to the terminal device. As illustrated in FIG. 7, the apparatus for transmitting the uplink signal includes: a dividing module 701, a generating module 702, and an adjusting module 703.

The dividing module 701 is configured to divide a transmission time of the uplink signal into a plurality of time segments according to a third duration.

The generating module 702 is configured to obtain an open-loop uplink timing advance and a closed-loop uplink timing advance for each time segment, and generate a timing advance for each time segment according to the open-loop uplink timing advance and the closed-loop uplink timing advance for each time segment.

The adjusting module 703 is configured to adjust a transmission time of one of the plurality of time segments of the uplink signal according to a corresponding timing advance for the one of the plurality of time segments.

Therefore, with the apparatus for transmitting the uplink signal according to the embodiments of the present invention, the transmission time of the uplink signal is divided into the plurality of time segments according to the third duration, the open-loop uplink timing advance and the closed-loop uplink timing advance are obtained for each time segment, the timing advance for each time segment is generated according to the open-loop uplink timing advance and the closed-loop uplink timing advance for each time segment, and the transmission time of the uplink signal is adjusted in one time segment according to the timing advance corresponding to the time segment. In this way, the present apparatus is capable of tracking and compensating for the rapid change in the propagation delay during transmission, thus avoiding the uplink interference among multiple users and multiple carriers.

Corresponding to the method for transmitting the uplink signal provided by the above embodiments, the present invention further provides an apparatus for transmitting an uplink signal. Since the apparatus for transmitting the uplink signal provided in embodiments of the present invention corresponds to the method for transmitting the uplink signal provided in the above-mentioned embodiments, embodiments of the method for transmitting the uplink signal are applicable to the apparatus for transmitting the uplink signal provided in the embodiments, and will not be described in detail here.

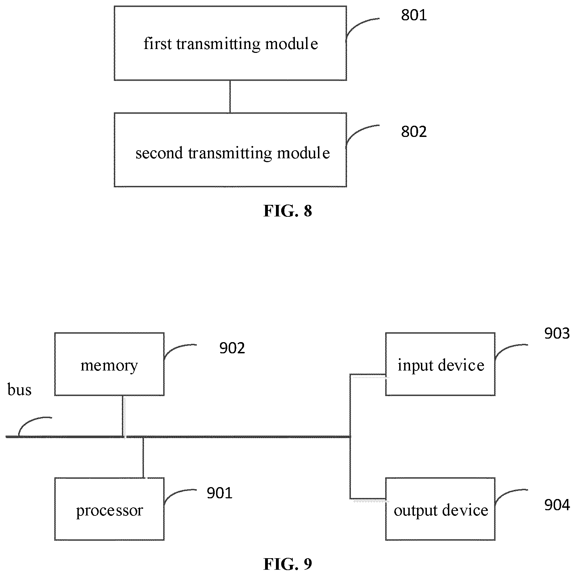

FIG. 8 is a schematic diagram illustrating an apparatus for transmitting an uplink signal according to the present invention.

The apparatus is applied to the network side. As illustrated in FIG. 8, the apparatus for transmitting the uplink signal includes: a first transmitting module 801, and a second transmitting module 802.

The first transmitting module 801 is configured to calculate at least one closed-loop uplink timing advance according to an arrival time of the uplink signal of a terminal device and transmit the at least one closed-loop uplink timing advance to the terminal device, to enable the terminal device to obtain the closed-loop uplink timing advance that matches each time segment for transmitting the uplink signal.

The second transmitting module 802 is configured to transmit satellite information to the terminal device to enable the terminal device to calculate an open-loop uplink timing advance for each time segment according to the satellite information, and generate a timing advance for each time segment according to the open-loop uplink timing advance and the closed-loop uplink timing advance to adjust a transmission time of one of the plurality of time segments of the uplink signal according to a corresponding timing advance for the one of the plurality of time segments.

Therefore, with the apparatus for transmitting the uplink signal according to embodiments of the present invention, the network side calculates at least one closed-loop uplink timing advance according to the arrival time of the uplink signal of the terminal device and transmits the at least one closed-loop uplink timing advance to the terminal device, to enable the terminal device to obtain the closed-loop uplink timing advance that matches each time segment for transmitting the uplink signal, and transmits the satellite information to the terminal device to enable the terminal device to calculate an open-loop uplink timing advance for each time segment according to the satellite information, and generate the timing advance for each time segment according to the open-loop uplink timing advance and the closed-loop uplink timing advance to adjust the transmission time of any one of the time segments of the uplink signal according to the timing advance corresponding to the one time segment. In this way, the terminal device is controlled to track and compensate for the rapid change in the propagation delay during transmission, thus avoiding the uplink interference among multiple users and multiple carriers.

According to embodiments of the present invention, there is provided a communication device and a readable storage medium.

FIG. 9 is a block diagram illustrating a communication device according to embodiments of the present invention. The communication device is intended to represent various forms of digital computers, such as a laptop computer, a desktop computer, a workstation, a personal digital assistant, a server, a blade server, a mainframe computer, or other suitable computers. The communication device may also represent various forms of mobile devices, such as personal digital processing, a cellular phone, a smart phone, a wearable device, or other similar computing device. The components illustrated herein, their connections and relationships, and their functions are merely examples, and not intended to limit the implementation of the present invention described and/or claimed herein.

As illustrated in FIG. 9, the communication device includes: one or more processors 901, a memory 902, and interfaces for connecting various components which include a high-speed interface and a low-speed interface. Various components are coupled to each other using different buses and may be installed on a common motherboard or installed in other ways as required. The processor may process instructions executed within the communication device, including instructions stored in or on the memory to display graphical information of a graphical user interface (GUI) on an external input/output device (such as a display device coupled to an interface). In other embodiments, a plurality of processors and/or buses may be used with a plurality of memories if desired. Similarly, a plurality of communication devices may be connected, each device provides a part of necessary operations (e.g., as a server array, a set of blade servers, or a multiprocessor system). In FIG. 9, one processor 901 is provided as an example.

The memory 902 is a non-transitory computer readable storage medium provided in the present invention. The memory stores instructions executable by at least one processor, such that the at least one processor is configured to implement the method for transmitting the uplink signal according to the present invention. The non-transitory computer readable storage medium of the present invention stores computer instructions for causing a computer to implement the method for transmitting the uplink signal according to the present invention.

As the non-transitory computer readable storage medium, the memory 902 may be used to store a non-transitory software program, a non-transitory computer executable program, and a module, such as program instructions/modules corresponding to the method for transmitting the uplink signal in the embodiments of the present invention. The processor 901 executes various functional applications and data processing of a server by operating the non-transitory software program, instructions, and modules stored in the memory 902, i.e., implements the method for transmitting the uplink signal described above.

The memory 902 may include a storage program area and a storage data area. The storage program area may store applications required by an operating system and at least one function. The storage data area may store data created according to the use of the communication device for executing the method for transmitting the uplink signal. In addition, the memory 902 may include a high-speed random access memory, and may also include a non-transitory memory, such as at least one disk memory device, flash memory device, or other non-transitory solid-state memory devices. In some embodiments, the memory 902 may optionally include memories remotely disposed with respect to the processor 901. These memories may be connected to the communication device for executing the method for transmitting the uplink signal through a network. Examples of the networks include, but are not limited to, the Internet, an intranet, a local area network, a mobile communication network, and combinations thereof.

The communication device for executing the method for transmitting the uplink signal may further include an input device 903 and an output device 904. The processor 901, the memory 902, the input device 903, and the output device 904 may be coupled by the bus or other means, for example, by a bus in FIG. 9.

The input device 903 may receive an input digital or character information, and generate key signal input related to user settings and function control of the communication device for executing the method for transmitting the uplink signal, such as a touch screen, a keypad, a mouse, a trackpad, a touchpad, a pointing stick, one or more mouse buttons, a trackball, a joystick, and other input device. The output device 904 may include a display device, an auxiliary lighting device (e.g., LED), a tactile feedback device (e.g., vibration motor), and the like. The display device may include, but be not limited to, a liquid crystal display (LCD), a light emitting diode (LED) display, and a plasma display. In some embodiments, the display device may be a touch screen.

Various embodiments of the systems and technologies described herein may be implemented in a digital electronic circuit system, an integrated circuit system, an application specific integrated circuit (ASIC), computer hardware, firmware, software, and/or combinations thereof. These embodiments may be implemented in one or more computer programs. The one or more computer program may be executed and/or interpreted on a programmable system including at least one programmable processor. The programmable processor may be a dedicated or general purpose programmable processor that may receive data and instructions from a storage system, at least one input device, and at least one output device, and transmit the data and instructions to the storage system, the at least one input device, and the at least one output device.

These computing programs (also referred to as programs, software, software applications, or codes) include machine instructions of a programmable processor, and may be implemented using high-level processes and/or object-oriented programming languages, and/or assembly/machine languages. As used herein, the terms "machine readable medium" and "computer readable medium" refer to any computer program product, device, and/or apparatus (e.g., a magnetic disk, an optical disk, a memory, a programmable logic device (PLD)) for providing machine instructions and/or data to a programmable processor, including a machine readable medium that receives machine instructions as a machine readable signal. The term "machine readable signal" refers to any signal used to provide the machine instructions and/or data to the programmable processor.

In order to provide interaction with a user, the systems and technologies described herein may be implemented on a computer. The computer has a display device (e.g., a cathode ray tube (CRT) or LCD monitor) for displaying information to the user, a keyboard and pointing device (e.g., a mouse or trackball). The user may provide input to the computer through the keyboard and the pointing device. Other kinds of devices may also be used to provide interaction with users. For example, a feedback provided to the user may be any form of sensory feedback (e.g., a visual feedback, an auditory feedback, or a tactile feedback), and may receive input from the user in any form (including acoustic input, voice input, or tactile input).

The systems and technologies described herein may be implemented in a computing system (e.g., as a data server) including a background component, a computing system (e.g., an application server) including a middleware component, a computing system including a front-end component (e.g., a user computer having a graphical user interface or a web browser, through which the user may interact with embodiments of the systems and technologies described herein), or a computing system including any combination of such background component, middleware component, or front-end component). Components of the system may be connected to each other by digital data communication (such as a communication network) in any form or medium. Examples of the communication network include a local area network (LAN), a wide area network (WAN), and the Internet.

The computer system may include a client and a server. The client and the server are generally remote from each other and typically interact through the communication network. A client-server relationship is generated by computer programs operating on corresponding computers and having the client-server relationship with each other.

According to the embodiments of the present invention, the change of the propagation delay during the transmission time is tracked and compensated for, and the transmission time of the uplink signal is adjusted to avoid the uplink interference among multiple users and multiple carriers.

It should be understood that steps may be reordered, added or deleted using various forms of processes illustrated above. For example, each step described in the present invention may be implemented in parallel, sequentially or in different orders, so long as a desired result of the technical solution disclosed in the present invention may be achieved, which is not limited here.

The above detailed embodiments do not limit the protection scope of the present invention. Those skilled in the art may understand that various modifications, combinations, subcombinations and substitutions may be made according to design requirements and other factors. Any modification, equivalent substitution and improvement made within the spirit and principles of the present invention shall be included in the protection scope of the present invention.

**Claims**

1. A method for transmitting an uplink signal, applied to a terminal device, comprising:

   dividing a transmission time of the uplink signal into a plurality of time segments according to a third duration;
   obtaining an open-loop uplink timing advance and a closed-loop uplink timing advance for each time segment, and generating a timing advance for each time segment according to the open-loop uplink timing advance and the closed-loop uplink timing advance for each time segment; and
   adjusting a transmission time of one of the plurality of time segments of the uplink signal according to a corresponding timing advance for the one of the plurality of time segments.

2. The method of claim 1, wherein dividing the transmission time of the uplink signal into the plurality of time segments comprises:

   receiving a first effective duration of the open-loop uplink timing advance and/or a second effective duration of the closed-loop uplink timing advance transmitted by a network side; and
   dividing the transmission time of the uplink signal into the plurality of time segments according to the first effective duration and/or the second effective duration.

3. The method of claim 2, wherein determining the third duration according to the first effective duration and/or the second effective duration comprises:

taking a minimum duration of the first effective duration and the second effective duration as the third duration.

4. The method of claim 1, wherein obtaining the open-loop uplink timing advance for each time segment comprises: calculating the open-loop uplink timing advance for each time segment according to one or more of positioning information of the terminal device, position information of a satellite, and velocity information of the satellite.

5. The method of claim 4, wherein the position information of the satellite and the velocity information of the satellite are received from a network side or obtained according to an ephemeris received from the network side.

6. The method of claim 1, wherein obtaining the closed-loop uplink timing advance for each time segment comprises:

receiving at least one closed-loop uplink timing advance transmitted by a network side;
determining, according to a receiving time and a second effective duration of each closed-loop uplink timing advance, the closed-loop uplink timing advance that matches each time segment; and
determining the closed-loop uplink timing advance corresponding to one time segment to be set as a fixed value in a case that no closed-loop uplink timing advance matches the one time segment.

7. The method of claim 6, wherein the fixed value is set as zero.

8. The method of claim 1, wherein obtaining the closed-loop uplink timing advance for each time segment comprises:

receiving an adjustment increment for the closed-loop uplink timing advance transmitted by a network side and an adjustment step size of the adjustment increment;
calculating an elapsed duration according to an obtaining time of a last closed-loop uplink timing advance and a start time of a current time segment for pending transmission; and
calculating a closed-loop uplink timing advance for the current time segment for pending transmission according to one or more of the last closed-loop uplink timing advance, the elapsed duration, the adjustment increment, and the adjustment step size.

9. The method of claim 1, wherein generating the timing advance for each time segment according to the open-loop uplink timing advance and the closed-loop uplink timing advance for each time segment comprises: obtaining the timing advance for each time segment by performing summation on the open-loop uplink timing advance and the closed-loop uplink timing advance for each time segment.

10. The method of claim 1, further comprising:

receiving an uplink timing advance at a cell level or a beam level transmitted by a network side;
wherein generating the timing advance for each time segment according to the open-loop uplink timing advance and the closed-loop uplink timing advance for each time segment comprises:
obtaining the timing advance for each time segment by performing summation on the uplink timing advance at the cell level or the beam level, the open-loop uplink timing advance and the closed-loop uplink timing advance for each time segment.

11. A method for transmitting an uplink signal, applied to a network side, comprising:

calculating at least one closed-loop uplink timing advance according to an arrival time of the uplink signal of a terminal device and transmitting the at least one closed-loop uplink timing advance to the terminal device, to enable the terminal device to obtain the closed-loop uplink timing advance that matches each time segment for transmitting the uplink signal; and
transmitting satellite information to the terminal device to enable the terminal device to calculate an open-loop uplink timing advance for each time segment according to the satellite information, and generate a timing advance for each time segment according to the open-loop uplink timing advance and the closed-loop uplink timing advance to adjust a transmission time of one of the plurality of time segments of the uplink signal according to a corresponding timing advance for the one of the plurality of time segments.

12. The method of claim 11, further comprising:
transmitting a first effective duration of the open-loop uplink timing advance and/or a second effective duration of the closed-loop uplink timing advance to the terminal device, to enable the terminal device to divide the transmission time of the uplink signal into a plurality of time segments according to the first effective duration and/or the second effective duration.

13. The method of claim 11, wherein transmitting the satellite information to the terminal device comprises:
transmitting an ephemeris and/or position information of a satellite and/or velocity information of the satellite to the terminal device.

14. The method of claim 11, further comprising:
transmitting an adjustment increment for the closed-loop uplink timing advance and an adjustment step size of the adjustment increment to the terminal device, to enable the terminal device to calculate a closed-loop uplink timing advance for a current time segment for pending transmission according to the adjustment increment and the adjustment step size.

15. An apparatus for transmitting an uplink signal, applied to a terminal device, comprising:

a dividing module configured to divide a transmission time of the uplink signal into a plurality of time segments according to a third duration;
a generating module configured to obtain an open-loop uplink timing advance and a closed-loop uplink timing advance for each time segment, and generate a timing advance for each time segment according to the open-loop uplink timing advance and the closed-loop uplink timing advance for each time segment; and
an adjusting module configured to adjust a transmission time of one of the plurality of time segments of the uplink signal according to a corresponding timing advance for the one of the plurality of time segments.

16. An apparatus for transmitting an uplink signal, applied to a network side, comprising:

a first transmitting module configured to calculate at least one closed-loop uplink timing advance according to an arrival time of the uplink signal of a terminal device and transmit the at least one closed-loop uplink timing advance to the terminal device, to enable the terminal device to obtain the closed-loop uplink timing advance that matches each time segment for transmitting the uplink signal; and
a second transmitting module configured to transmit satellite information to the terminal device to enable the terminal device to calculate an open-loop uplink timing advance for each time segment according to the satellite information, and generate a timing advance for each time segment according to the open-loop uplink timing advance and the closed-loop uplink timing advance to adjust a transmission time of one of the plurality of time segments of the uplink signal according to a corresponding timing advance for the one of the plurality of time segments.

17. A communication device, comprising:

a processor;
a transceiver;
a memory; and
a computer program stored in the memory,
wherein the processor is configured to run the computer program to implement the method for transmitting the uplink signal according to any one of claims 1 to 10.

18. A communication device, comprising:

a processor;
a transceiver;
a memory; and
a computer program stored in the memory,
wherein the processor is configured to run the computer program to implement the method for transmitting the uplink signal according to any one of claims 11 to 14.

19. A processor-readable storage medium having a computer program stored thereon, wherein the computer program is configured to enable the processor to implement the method for transmitting the uplink signal according to any one of claims 1 to 10 or the method for transmitting the uplink signal according to any one of claims 11 to 14.

dividing a transmission time of the uplink signal into a plurality of time segments according to a third duration, where a duration of each of the plurality of time segments is not greater than the third duration

~101

obtaining an open-loop uplink timing advance and a closed-loop uplink timing advance for each time segment, and generating a timing advance for each time segment according to the open-loop uplink timing advance and the closed-loop uplink timing advance for each time segment

~102

adjusting a transmission time of one of the plurality of time segments of the uplink signal according to a corresponding timing advance for the one of the plurality of time segments

~103

**FIG. 1**

obtaining the positioning information of the terminal device corresponding to each time segment

~201

obtaining the position information of the satellite and/or the velocity information of the satellite corresponding to each time segment

~202

calculating the open-loop uplink timing advance for each time segment according to the positioning information of the terminal device, the position information of the satellite and/or the velocity information of the satellite

~203

**FIG. 2**

receiving at least one closed-loop uplink timing advance transmitted by a network side — 301

determining, according to a receiving time and a second effective duration of each closed-loop uplink timing advance, the closed-loop uplink timing advance that matches each time segment — 302

determining the closed-loop uplink timing advance corresponding to one time segment to be set as a fixed value in a case that no closed-loop uplink timing advance matches the one time segment — 303

**FIG. 3**

receiving an adjustment increment for the closed-loop uplink timing advance transmitted by a network side and an adjustment step size of the adjustment increment — 401

calculating an elapsed duration according to an obtaining time of a last closed-loop uplink timing advance and a start time of a current time segment for pending transmission — 402

calculating a closed-loop uplink timing advance for the current time segment for pending transmission according to one or more of the last closed-loop uplink timing advance, the elapsed duration, the adjustment increment, and the adjustment step size — 403

**FIG. 4**

receiving an uplink timing advance at a cell level or a beam level transmitted by a network side — 501

obtaining the timing advance for each time segment by performing summation on the uplink timing advance at the cell level or the beam level, the open-loop uplink timing advance and the closed-loop uplink timing advance for each time segment — 502

**FIG. 5**

calculating at least one closed-loop uplink timing advance according to an arrival time of the uplink signal of a terminal device and transmitting the at least one closed-loop uplink timing advance to the terminal device, to enable the terminal device to obtain the closed-loop uplink timing advance that matches each time segment for transmitting the uplink signal — 601

transmitting satellite information to the terminal device to enable the terminal device to calculate an open-loop uplink timing advance for each time segment according to the satellite information, and generate a timing advance for each time segment according to the open-loop uplink timing advance and the closed-loop uplink timing advance to adjust a transmission time of one of the plurality of time segments of the uplink signal according to a corresponding timing advance for the one of the plurality of time segments — 602

**FIG. 6**

dividing module — 701

generating module — 702

adjusting module — 703

**FIG. 7**

first transmitting module — 801

second transmitting module — 802

**FIG. 8**

memory — 902

bus

input device — 903

processor — 901

output device — 904

**FIG. 9**

## INTERNATIONAL SEARCH REPORT

| International application No. |
| --- |
| **PCT/CN2021/077524** |

| A. | CLASSIFICATION OF SUBJECT MATTER |
| --- | --- |

H04W 72/04(2009.01)i

According to International Patent Classification (IPC) or to both national classification and IPC

| B. | FIELDS SEARCHED |
| --- | --- |

Minimum documentation searched (classification system followed by classification symbols)

H04W; H04Q; H04B; H04J

Documentation searched other than minimum documentation to the extent that such documents are included in the fields searched

Electronic data base consulted during the international search (name of data base and, where practicable, search terms used)

EPTXT; USTXT; WOTXT; CNTXT; CNABS; DWPI; SIPOABS; CNKI; 3GPP: 间隔, 提前, 闭环, 时间段, 卫星, 上行, 调整; satellite, time, adjust, loop, closed, uplink, interval, advance

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 111953468 A (BEIJING SAMSUNG TELECOM R&D CENTER et al.) 17 November 2020 (2020-11-17) description paragraphs [0044]-[0196], figures 1-16 | 1, 11, 15-19 |
| X | CN 109600847 A (BEIJING SAMSUNG TELECOM R&D CENTER) 09 April 2019 (2019-04-09) description paragraphs [0055]-[0179], figures 1-9 | 1, 11, 15-19 |
| X | CN 108882260 A (SONY CORPORATION) 23 November 2018 (2018-11-23) description paragraphs [0052]-[0186], figures 1-14 | 1, 11, 15-19 |
| A | US 2020351627 A1 (VERITY STUDIOS AG) 05 November 2020 (2020-11-05) entire document | 1-19 |
| A | US 2020314812 A1 (XU KAI et al.) 01 October 2020 (2020-10-01) entire document | 1-19 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 November 2021** | **17 November 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**EP 4 301 061 A1**

| INTERNATIONAL SEARCH REPORT<br>Information on patent family members | | | | International application No.<br>**PCT/CN2021/077524** | | | |
|---|---|---|---|---|---|---|---|
| Patent document<br>cited in search report | | | Publication date<br>(day/month/year) | Patent family member(s) | | | Publication date<br>(day/month/year) |
| CN | 111953468 | A | 17 November 2020 | US | 2017346685 | A1 | 30 November 2017 |
| | | | | WO | 2016105175 | A1 | 30 June 2016 |
| | | | | CN | 105790911 | A | 20 July 2016 |
| | | | | CN | 105790911 | B | 31 July 2020 |
| | | | | US | 2020153684 | A1 | 14 May 2020 |
| | | | | US | 10536331 | B2 | 14 January 2020 |
| CN | 109600847 | A | 09 April 2019 | EP | 3676983 | A4 | 07 October 2020 |
| | | | | KR | 20200051044 | A | 12 May 2020 |
| | | | | EP | 3676983 | A1 | 08 July 2020 |
| CN | 108882260 | A | 23 November 2018 | US | 11051266 | B2 | 29 June 2021 |
| | | | | AU | 2018264196 | A1 | 02 January 2020 |
| | | | | US | 2021136709 | A1 | 06 May 2021 |
| | | | | WO | 2018205807 | A1 | 15 November 2018 |
| | | | | CN | 110291823 | A | 27 September 2019 |
| | | | | EP | 3614753 | A1 | 26 February 2020 |
| | | | | EP | 3614753 | A4 | 01 April 2020 |
| US | 2020351627 | A1 | 05 November 2020 | US | 10111044 | B2 | 23 October 2018 |
| | | | | US | 10321286 | B2 | 11 June 2019 |
| | | | | US | 9661472 | B2 | 23 May 2017 |
| | | | | US | 2019387374 | A1 | 19 December 2019 |
| | | | | US | 10440533 | B2 | 08 October 2019 |
| | | | | US | 2019058977 | A1 | 21 February 2019 |
| | | | | US | 2019058978 | A1 | 21 February 2019 |
| | | | | US | 2016353238 | A1 | 01 December 2016 |
| | | | | US | 2017026807 | A1 | 26 January 2017 |
| | | | | US | 10721602 | B2 | 21 July 2020 |
| US | 2020314812 | A1 | 01 October 2020 | US | 10966191 | B2 | 30 March 2021 |

Form PCT/ISA/210 (patent family annex) (January 2015)